# EUROPÄISCHE PATENTSCHRIFT

(11) **EP 1 520 550 B1**
(45) Veröffentlichungstag und Bekanntmachung des Hinweises auf die Patenterteilung: **10.01.2007**
(21) Anmeldenummer: 03474001.9
(22) Anmeldetag: 01.10.2003
(51) Int. Cl.: A61C 13/265

(54) **Geschiebeanker zur Fixierung abnehmbarer Zahnersätze**
Sliding element for removably anchoring dental prostheses
Fixation à glissière pour prothèses dentaires amovibles

(43) Veröffentlichungstag der Anmeldung: 06.04.2005
(73) Patentinhaber: Zoltán-Kulisadent, Tücsök, 94637 Moca (SK)
(72) Erfinder: Zoltán-Kulisadent, Tücsök, 94637 Moca (SK)

(56) Entgegenhaltungen:
- EP-A- 0 164 768
- WO-A-92/10977
- DE-A- 19 641 078
- US-A- 4 781 592

## Beschreibung

Die Erfindung betrifft einen Geschiebeanker zur Fixierung, Verankerung abnehmbarer Zahnersätze, mit zwei ineinander passenden Verbindungssystemen, einer Patrize und einer Matrize, gemäss den Merkmalen im Oberbegriff des Patentanspruchs 1. Verwendungsbereich bedeuten alle Verbindungsstellen, wo feinmechanische Fixierungsmittel zur Fixierung abnehmbarer Zahnersätze verwendet werden können.

Entsprechend dem Stand der Technik existieren zahlreiche Lösungen. Unter den oft verwendeten Varianten gehören die einfacheren Formen, und zwar in die Patrize eingebaute Kugelformen. Die Mechanisme, die den zur Anwedung führenden Weg vereinfachen, erhöhen die Möglichkeit der Ausnützung. Zu solchen Lösungen gehört das Patent mit Registerzahl WO 92/10977 . Das Wesen dieses Patents ist, dass die verwendete Patrize, die eine an einer ortfesten Metallkrone über eine Stützplatte und einen Steg verbundener kugelförmiger Körper ist, leicht ausführungsmöglich ist, und ihre Verbindung mit der Matrize, die eine mit federnder Klemmwand versehene Schale ist und über eine an ihrem Boden vorgesehene Retenition an einer Zahnprotese festlegebar ist, ergibt eine einfache Lösung.

Sein Nachteil ist, dass grössere Belastung auf die Patrize, zwischen die Stützplatte und die mit ihr in dauerhafter Verbindung stehende Kugelform fällt, wegen der auf die Kugelfläche wirkende Friktionskraft und der disproportionierten Verbindung des Stegs. So wird dieser Teil verletzbarer. Die grössere Belastung fällt hauptsächlich in die Zeitspanne der wirksameren Friktionsfläche, also in die Zeitspanne nach dem Aufsetzen, als der Mechanismus noch nicht gebraucht ist. Die Möglichkeit der Verletzung erhöht auch in der Verbindung der Stützplatte und des Stegs entstandene scharfe Bruchlinie.

Der Zweck der Erfindung ist, die Mangelhaftigkeit der bekannten Lösungen zu beseitigen, und durch die Legierung eines Geschiebeelements und eines Verankerungselements ein effektiveres Verbindungssystem zustande zu bringen.

Die Lösung nach der Erfindung ist also ein Geschiebeanker, ein Mechanismus zur Verankerung und Fixierung abnehmbarer Zahnersätze, mit zwei ineinander passenden Verbindungssy'stemen, einer Patrize und einer Matrize. Das Wesen der Erfindung ist, dass der Geschiebeanker einen ortfesten an einem Fixierelement befestigten mit einer Stützplatte, halbkreisförmigen Mulde ausgestalteten Überbückungssattel, an ihn angeschlossenen an beiden Seiten mit einer Aushöhlung versehenen linsenförmigen Körper enthält, die die Patrize bilden, und auf die Patrize formschlüssig passende Matrize. Die Matrize enthält einen auf den Überbrückungssattel aufschiebbaren U förmigen Bügel, eine entgegengesetzt auf den linsenförmigen Körper angebrachte Klemmhülle umfassend mit einer Rille und mit die Federung beförndernden Schlitzen, weiter einen die beiden Teile verbindenden Sockel, an dem Retentionen sind, durch den an einem abnehmbaren Zahnersatz befestigt ist.

Der Geschiebeanker nach der Erfindung kann in seiner vorteilhaften Ausführungsform die Kombination von Legierungen verschleissfester zahnersätzlicher Hartmetalle sein, wo das Material der Patrize und das Material der Metallzahnkrone identisch sind, und das Material der Matrize federnde für die Mundhygenie geeignete Chromstahllegierung ist. In diesem Fall kann man die Dimensionen des Geschiebeankers auf das möglichst kleinste Mass reduzieren, so kann man ihn auch bei den estetisch ungünstigen Zahnersätzen verwenden. In weiterer vorteilhafter Version kann das Material der Patrize aus Kombination zahnärztlicher Metalllegierungen bestehen, und das Material der Matrize kann für Mundhygenie geeigneter Kunststoff sein.

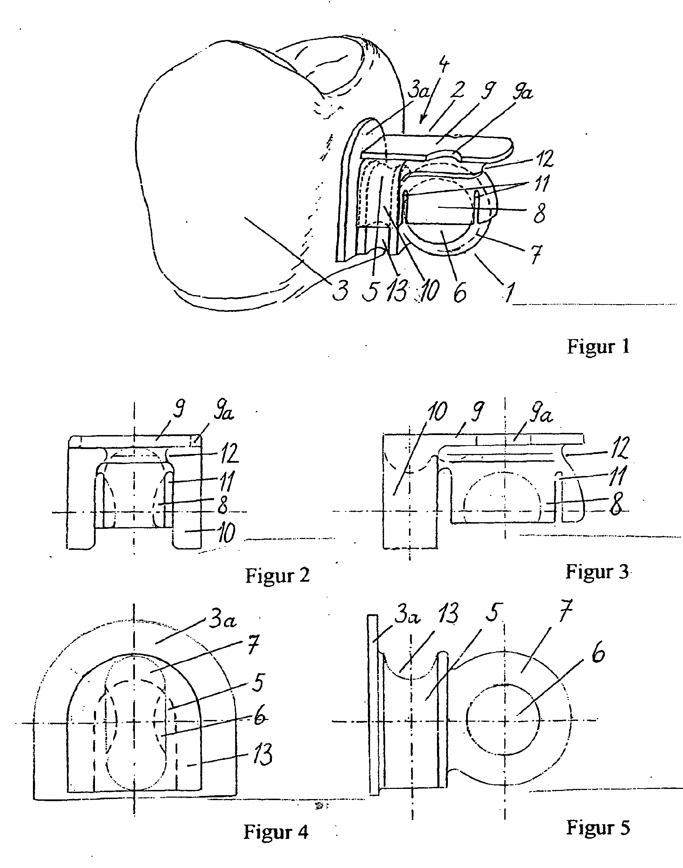

Der Mechanismus des Geschiebeankers nach der Erfindung kann durch die Zeichnungen detailhafter kennengelernt werden:
Auf der Figur 1 ist der Geschiebeanker am Fixierelement befestigt, in zusammengefügtem Zustand, in perspektivischer Darstellung zu sehen, ( axonomische Darstellung),
auf der Figur 2 ist die Matrize des Geschiebeankers in Hauptansicht,
auf der Figur 3 ist die Matrize des Geschiebeankers in Seitenansicht,
auf der Figur 4 ist die Patrize des Geschiebeankers in Hauptansicht,
auf der Figur 5 ist die Patrize des Geschiebeankers in Seitenansicht zu sehen.

Auf der Figur 1 ist der am Fixierelement 3 befestigte Geschiebeanker 4 in zusammengefügtem Zustand zu sehen, dessen Matrize 2 an die Patrize 1 formschlüssig passt. Den Geschiebeanker 4 bildende Patrize 1 und Matrize 2 sind durch die Legierung von zwei Elementen hergestellt so, dass das Geschiebeelement und das Verankerungselement eine konstruktive Einheit bilden. Daraus folgt, dass die Elemente der Patrize 1 und Matrize 2 einer bestimmten Reihenfolge folgen, und auch die gegenseitigen Proportionen der Dimensionen der einzelnen Elemente bestimmen.

Auf der Figur 2 befinden sich die Elemente der Matrize 2 symmetrisch um die vertikale Achse. Der von der horizontalen Achsenlinie der Klemmhülle 8 bis zur Schlusslinie der umfassender Rille 12 erstreckende Abschnitt gewährleistet die wirksame Friktionsfläche, die die Voraussetzung der Verankerung ist.

Auf der Figur 3 ist das Geschiebeelement der Matrize 2, der U förmige Bügel 10, mit dem Verankerungselement, der Klemmhülle 8, durch den zusammenfassenden Sockel 9 verbindet. Die Arme des U förmigen Bügels 10 überreichen die horizontale Achsenlinie der Patrize 1, und sie passen formschlüssig auf den Überbrückungssattel 5 der Patrize 1. Die Arme der Klemmhülle 8 reichen bis zur horizontalen Achsenlinie. Der Einschnitt der die Federung befördernden Schlitze 11 reicht an der Schlusslinie der Aushöhlung 6, von der horizontalen Achsenlinie vertikal bis zur Schlusslinie der die Klemmhülle 8 umfassenden Rille 12. Der unter der Schlusslinie der umfassenden Rille 12 und zwischen den inneren Enden der Schlitze 11 befindliche Abschnitt gewährleistet die Federung des Elements.

Die Retentionen 9a befinden sich symmetrisch um die vertikale Schnittlinie des Sockels 9 dem linsenförmigen Körper 7, sieh die Figur 5.

Auf der Figur 4 die Teile der zwei Elemente der Patrize 1 befinden sich symmetrisch, in gleicher Höhe um die gemeinsame auf die horizontale Achsenlinie vertikale Achse. Der Mittelpunkt der Aushöhlungen 6 und des linsenförmigen Körpers 7 befindet sich im Schnittpunkt der zwei Achsenlinien.

Auf der Figur 5 ist der Massstab der Elemente der Patrize 1 in Seitenansicht zu sehen, wo der mit halbkreisförmiger Mulde 13 versehene Überbrückungssattel 5 den Teil des Geschiebeelements sichert, der sich in engem Zusammenhang an mit ihm auf der gemeinsamen horizontalen Achsenlinie zusammengebautes Verankerungselement anschliesst, an den auf zwei Seiten mit aushöhlungen 6 versehenen linsenförmigen Körper 7. Der Aussendurchmesser des linsenförmigen Körpers 7 und der Aussendurchmesser des Überbrückungssattels 5 sind identisch Figur 4.

Der Zweck der feinmechanischen Befestigungsmittel ist, um in verborgener Form durch ein ortfestes Fixierelement 3 die Befestigung eines abnehmbaren Zahnersatzes zu sichern. Wie es die Figur 1 zeigt, der Geschiebeanker 4 mit seinen Dimensionen muss in den Dimensionen des Fixierelements 3 verborgen werden so, dass die vollkommene Funktion nach der esthetishen Einhüllung des Mechanismus gesichert wird. Deshalb sind die Mechanisme von kleinem Format aus esthetischen Gründen vorteilhafter, aber wegen der auf sie wirkende Kaukräfte können sie leichter beschädigt werden. Die Patrize 1 des Geschiebeelements 4 wirkt bestimmend auf die Funktion versichernde Matrize 2. Die Aufgabe des durch halbkreisförmige Mulde 13 ausgestalteten Überbrückungssattels 5 ist die Sicherung der Zerteilung von Kaukräfte zwischen dem von oben formschlüssig passenden U förmigen Bügel 10 und dem lastentragenden Fixierelement 3, aber nur in jenem Fall, wenn die mit der Stützplatte 3a versehene Patrize 1 in der entsprechenden Richtung, und zwar in der Richtung der gemeinsamen Achsenlinie der restlichen Zähne paralell, zum Fixierelement 3 befestigt wurde. Dazu leisten Hilfe die auf dem Überbrückungssattel 5 ausgestaltete halbkreisförmige Mulde 13 und ein dazu formschlüssig ausgestalteter paralell führender Arm. Auf so befestigte Patrize 1 wird die mit dem U förmigen Bügel 10 und der Klemmhülle 8 versehene Matrize 2 schon in entsprechender Richtung den an der Matrize 2 befestigten abnehmbaren Zahnersatz aufschieben und anklemmen. Also die Richtung der Aufschiebung ist die Voraussetzung der glatten Verbindung. Die richtige Richtung beim Ein- und Ausgliedern des Zahnersatzes erlaubt das Verkanten des Zahnersatzes nicht, so wird für den Prothesenträger eine einfache Verwendung gewährleistet. Der Vorteil der Erfindung ist, dass ein wirksameres Verbindungssystem durch die Legierung eines Geschiebeelements und eines Verankerungselements zustande gabracht wurde, das auch durch seine Massstäbe verkleinern werden kann, so dass seine Funktionsfähigkeit sich inzwischen nicht verändert. Die federnde Klemmhülle des Verankerungselements der Matrize des Geschiebeankers kann auch im Falle der Abnutzung wieder aktivisiert werden.

### Das Verzeichnis der verwendeten Begriffe

1 Patrize
2 Matrize
3 Fixierelement
3 a Stützplatte
4 Geschiebeanker
5 Überbrückungssattel
6 Aushöhlung
7 linsenförmiger Körper
8 Klemmhülle
9 Sockel
9a Retention
10 U förmiger Bügel
11 Schlitze
12 Rille
13 halbkreisförmige Mulde

## Patentansprüche

1. Ein Geschiebeanker (4) als ein die Befestigung abnehmbarer Zahnersätze sichernder Mechanismus von zwei ineinander passenden Verbindungssystemen, mit einer Patrize (1) und einer Matrize (2), **dadurch gekennzeichnet, dass** die Patrize (1) eine ortsfeste, an dem Fixierelement (3) befestigbare Stützplatte (3a) und einen, an zwei Seiten mit Aushöhlungen (6) versehenen linsenförmigem Körper (7) enthält, und dass die Matrize (2) formschlüssig auf die Patrize (1) passt, wobei die Matrize eine auf den linsenförmigen Körper (7) aufschiebbare entgegengesetzt anbringbare Klemmhülle (8), enthaltend eine umfassende Rille (12) und eine durch Schlitze (11) beförderte Federung, und weiter einen Sockel (9) mit Retentionen (9a) enthält, durch den die Matrize an einem abnehmbaren Zahnersatz befestigbar ist.

2. Ein Geschiebeanker (4) nach Anspruch 1 **dadurch gekennzeichnet, dass** die Stützplatte (3a) als ein mit einer halbkreisförmigen Mulde (13) versehener Überbrückungssattel (5) ausgestaltet ist, und dass der Sockel (9) einen auf den Überbrückungssattel (5) aufschiebbaren U-förmigen Bügel (10) aufweist.

## Claims

1. A sliding anchor (4) acting as a mechanism securing the attachment of removable dentures consisting of two interlocking connection elements with one patrix (1) and one matrix (2), specific in that the patrix (1) contains a stable support plate (3a) coupled to the fixation element (3) and a lens-shaped surface structure (7) with concavities on both sides (6) and the matrix (2) is adapted in shape to couple to the patrix (1), whereby the matrix is fitted with a locking catch (8) that is adjustable to connect to the opposing lens-shaped surface structure (7) and that contains an extensive groove (12) and springs acting inside slits (11) and with a socket (9) and retaining pins (9a), which allow the matrix to connect to removable dentures.

2. A sliding anchor (4) as per Claim 1, specific in that the support plate (3a) is designed as a bridging saddle (5) fitted with a semicircle-shaped cavity (13) and the socket (9) contains a U-strap (10) sliding onto the bridging saddle (5).

## Revendications

1. Un point d'ancrage glissant (4) qui agit comme un mechanisme pour attacher les prothéses amovibles, qui consiste en deux éléments de connexion complementairs avec une patrice (1) et une matrice (2) et qui est spécifique en ce que la patrice (1) contient une planche de support stable (3a) attachée à un élément de fixation (3) et un corps lentiforme (7) avec des concavités sur chaque côté (6) et la matrice (2) est de forme adaptée à la patrice (1), alors que la matrice est muni d'une attache à serrage (8) qui est ajustable pour accommoder le corps lentiforme (7) et qui contient une rainure étendue (12) et des ressorts dans des fentes (11) et aussi d'un logement (9) et des fixations (9a), ce qui permet la matrice à relier aux prothéses amovible.

2. Un point d'ancrage glissant (4) selon Demande 1 qui est spécifique en se que la planche de support (3a) est mise en place comme une semelle de shuntage (5) muni d'une cavité demi-circulaire (13) et le logement (9) contient un crochet en forme de U (10) qui se met sur la semelle de shuntage (5).
